# EUROPÄISCHE PATENTSCHRIFT

(11) **EP 3 170 307 B1**
(45) Veröffentlichungstag und Bekanntmachung des Hinweises auf die Patenterteilung: **26.08.2020**
(21) Anmeldenummer: 14749703.6
(22) Anmeldetag: 15.07.2014
(51) Int. Cl.: H04N 13/128, H04N 13/117

(54) **VERFAHREN ZUR DARSTELLUNG EINER DREIDIMENSIONALEN SZENE AUF EINEM AUTOSTEREOSKOPISCHEN MONITOR**
METHOD FOR DISPLAYING THREE DIMENSIONAL SCENE ON AN AUTOSTEREOSCOPIC DISPLAY
PROCÉDÉ POUR LA GESTION DE LA REPRÉSENTATION D'UNE SCÉNE 3D SUR UN DISPOSITIF D'AFFICHAGE AUTOSTÉRÉOSCOPIQUE

(43) Veröffentlichungstag der Anmeldung: 24.05.2017
(73) Patentinhaber: NOVOMATIC AG, 2352 Gumpoldskirchen (AT)
(72) Erfinder: KUGLER, Andreas, 2352 Gumpoldskirchen (AT)
(74) Vertreter: Wildhack & Jellinek
(86) Internationale Anmeldenummer: PCT/AT2014/050158
(87) Internationale Veröffentlichungsnummer: WO 2016/007976

(56) Entgegenhaltungen:
- US-A1- 2013 235 005

## Beschreibung

Die Erfindung betrifft ein Verfahren zur Darstellung einer dreidimensionalen Szene auf einem autostereoskopischen Monitor gemäß dem Oberbegriff des Patentanspruchs 1. Weiters betrifft die Erfindung einen autostereoskopischen Monitor gemäß dem Oberbegriff des Patentanspruchs 5.

Die US 2013/235005 A1 zeigt einen Monitor, mit dem eine stereoskopische Bildanzeige unabhängig vom Winkel und von der Entfernung aus denen der Monitor betrachtet wird, möglich ist. Dabei wird dasselbe Bild an zwei oder mehr aufeinanderfolgenden Pixel-Positionen dargestellt, sodass vom rechten bzw. vom linken Auge des Betrachters je nach Entfernung des Betrachters zum Monitor und Betrachtungswinkel das Bild mit unterschiedlichen Pixelabständen erfasst wird. Die Anzeige der Eingangsbilder wird auf drei verschiedene Betrachtungsabstände eingestellt. Die Pixelabstände sind dabei physikalisch vorgegeben.

Aus dem Stand der Technik sind unterschiedliche Ausführungsformen von autostereoskopischen Monitoren bekannt, die ein Lichtfeld abgeben, das beim Betrachter einen dreidimensionalen Eindruck erzeugt, wenn er sich auf einer vorgegebenen Ebene mit einem bestimmten Abstand zur Bildebene befindet. Bewegt sich der Betrachter hingegen aus dieser Ebene heraus, so nimmt der dreidimensionale Eindruck in Abhängigkeit zum Normalabstand zu dieser Ebene solange ab, bis er ab einer gewissen Entfernung nicht mehr gegeben ist. Somit ist allen diesen Ausführungsformen gemein, dass dem Betrachter ein konstruktionsbedingt vorgegebener Bereich vor dem autostereoskopischen Monitor zur Verfügung steht, wo stereoskopisches Sehen und damit ein dreidimensionaler Eindruck möglich ist. Aus dem Stand der Technik sind unterschiedliche Verfahren bekannt, bei denen jeweils die genaue Position des Betrachters vor dem Bildschirm ermittelt wird und anschließend ein für diese Position optimales Lichtfeld für den jeweiligen Betrachter ermittelt und dem Betrachter angezeigt wird. Solche Verfahren sind sehr rechenaufwendig und werden zumeist nur für Spezialfälle eingesetzt. Aufgabe der Erfindung ist es, ein Verfahren zur Verfügung zu stellen, welches den konstruktionsbedingt vorgegebenen Bereich vor dem autostereoskopischen Bildschirm, wo stereoskopisches Sehen möglich ist, ressourcensparend und einfach erweitert. Die vorgegebene Ebene, wo der Betrachter ohne dieses Verfahren ein optimales stereoskopisches Bild sehen würde, kann daher durch dieses Verfahren auf einer Normalen zur Bildschirmebene nach vorne oder hinten verschoben werden.

Die Erfindung löst diese Aufgabe bei einem Verfahren der eingangs genannten Art mit den kennzeichnenden Merkmalen des Patentanspruchs 1.

Die Erfindung sieht ein Verfahren zur Darstellung einer dreidimensionalen Szene auf einem autostereoskopischen Monitor vor, wobei
a) eine Anzahl N von Grundbildern einer dreidimensionalen Szene vorgegeben wird, die die dreidimensionale Szene jeweils aus unterschiedlichen Blickwinkeln zeigen,
b) für jedes der Grundbilder jeweils eine Grundbildmaske mit jeweils der Größe einer nativen Bildschirmauflösung des autostereoskopischen Monitors oder eines Teilbereichs des autostereoskopischen Monitors vorgegeben wird, und
c) der Normalabstand des Betrachters vom autostereoskopischen Monitor normal zur Bildschirmebene des autostereoskopischen Monitors ermittelt wird.

Die Erfindung löst die zuvor angeführte Aufgabe bei einem Verfahren der eingangs genannten Art mit den kennzeichnenden Merkmalen des Patentanspruchs 1. Erfindungsgemäß ist dabei vorgesehen, dass
d) ein Streckfaktor in Abhängigkeit des Normalabstands ermittelt wird, und
e) die einzelnen Grundbilder pixelweise oder subpixelweise mit den Werten der ihnen jeweils zugeordneten Bildmaske gewichtet und anschließend zu einem Rasterbild addiert werden,
f) das derart ermittelte Rasterbild auf dem Bildschirm des autostereoskopischen Monitors dargestellt wird,
g) die Grundbildmasken entsprechend dem Streckfaktor in Richtung der horizontalen Bildachse gestreckt oder gestaucht und mittels Interpolation auf jeweilige Bildmasken übertragen werden, wobei die jeweiligen Bildmasken dieselbe Auflösung und Breite aufweisen wie die Grundbildmasken und
h) die durch Stauchung und/oder Streckung aus den Grundbildmasken erstellten Bildmasken horizontal zentriert werden, sodass der horizontale Mittelpunkt der zentrierten Bildmasken mit dem horizontalen Mittelpunkt der Grundbildmasken übereinstimmt.

Alternativ zu Schritt g) können auch die Bildmasken in Richtung der horizontalen Bildachse gestreckt oder gestaucht werden, wobei der Streckfaktor indirekt proportional zum ermittelten Normalabstand ist.

Hierbei ergibt sich der vorteilhafte Effekt, dass nicht die genaue Position des Betrachters vor dem Monitor sondern nur jede Änderung des Normalabstands des Betrachters vom Monitor zu einer Neuberechnung der einzelnen Bildmasken nötig ist und diese Neuberechnung besonders einfach und ressourcensparend erfolgen kann. Für das menschliche Auge ergeben sich aufgrund der Interpolation kaum wahrnehmbare Verschlechterungen der Bildqualität.

Eine bevorzugte Ausgestaltung der optischen Eigenschaften sieht vor, dass einer Bildzeile des Bildschirms eine Anzahl von optischen Elementen zugeordnet wird, wobei vom jedem Grundbild herrührenden Farb- und/oder Helligkeitswerte über die jeweiligen optischen Elemente auf einen jeweiligen Projektions-Punkt projiziert werden, der einen vorgegebenen Abstand zum autostereoskopischen Monitor aufweist, wobei der Abstand zwischen je zwei benachbarten Projektions-Punkten auf der Geraden, auf der sich der Betrachter aktuell befindet, im Wesentlichen dem jeweiligen Abstand zwischen je zwei benachbarten Projektions-Punkten auf der Geraden mit nominalem Abstand zum autostereoskopischen Monitor entspricht.

Um eine optimale Anpassung an den Benutzer bei gleichzeitig geringem Ressourcenbedarf zu ermöglichen, kann vorgesehen sein, dass Schritt c) einmalig oder zu vorgegebenen Aktualisierungszeitpunkten, insbesondere laufend, durchgeführt und der Normalabstand neu gemessen und aktualisiert wird, und dass bei Änderung des ermittelten Normalabstands oder nach jeder Bestimmung des Normalabstands die Schritte d), g) und h) erneut durchgeführt werden.

Zur Darstellung bewegter Bilder kann vorgesehen sein, dass zur Darstellung bewegter dreidimensionaler Szenen eine Videodatenstruktur zur Verfügung gestellt wird, wobei für jeden Zeitpunkt jeweils N Grundbilder der dreidimensionalen Szene zur Verfügung stehen, und für jeden Zeitpunkt jeweils die Schritte b), c), e), f) ausgeführt werden.

Weiters löst die Erfindung die Aufgabe mit einem autostereoskopischen Monitor zur Darstellung einer dreidimensionalen Szene, die als eine Anzahl von Grundbildern vorliegt, die die darzustellende dreidimensionale Szene jeweils aus unterschiedlichen Blickwinkeln zeigen. Der autostereoskopische Monitor umfasst:
- für jedes der Grundbilder jeweils einen Speicher für eine Grundbildmaske mit der Größe einer nativen Bildschirmauflösung des autostereoskopischen Monitors, oder eines dem stereoskopischen Anzeigefenster angepassten Teilbereichs davon,
- eine Gewichtungseinheit, die dazu ausgebildet ist, eine Anzahl von Grundbildmasken vorzugeben,
- einen Bildschirm zur Darstellung eines Rasterbilds, und
- optische Elemente, die bei Verwendung einer Grundbildmaske das von den Grundbildern herrührende Licht jeweils auf Punkte auf einer Geraden abbilden,
- eine Detektionseinheit zur Bestimmung des Normalabstands des Betrachters vom autostereoskopischen Monitor normal zur Bildebene des autostereoskopischen Monitors , und

Erfindungsgemäß ist dabei eine Aktualisierungseinheit vorgesehen, die bei Änderung des Normalabstands des Betrachters einen Streckfaktor in Abhängigkeit des Normalabstands ermittelt, wobei die Bildmasken nach der horizontalen Bildachse in Abhängigkeit des Streckfaktors gestreckt oder gestaucht werden.

Erfindungsgemäß ist weiters vorgesehen, dass die Gewichtungseinheit dazu ausgebildet ist,
- die einzelnen Grundbilder subpixelweise mit den Werten der ihnen jeweils zugeordneten Bildmaske zu gewichten und anschließend zu addieren, und
- die Grundbildmasken entsprechend dem Streckfaktor in Richtung der horizontalen Bildachse zu strecken oder zu stauchen und mittels Interpolation auf die Bildmasken zu übertragen, wobei die Bildmasken dieselbe Auflösung und Breite aufweisen wie die Grundbildmasken und
- die durch Stauchung und/oder Streckung aus den Grundbildmasken erstellten Bildmasken horizontal zu zentrieren, sodass der horizontale Mittelpunkt der zentrierten Bildmasken mit dem horizontalen Mittelpunkt der Grundbildmasken übereinstimmt.

Eine bevorzugte Ausgestaltung der optischen Eigenschaften sieht vor, dass der Abstand zwischen je zwei benachbarten Punkten auf der Geraden, auf der sich der Betrachter befindet, dem Abstand zwischen je zwei benachbarten Punkten auf der Geraden mit nominalem Abstand zum autostereoskopischen Monitor entspricht.

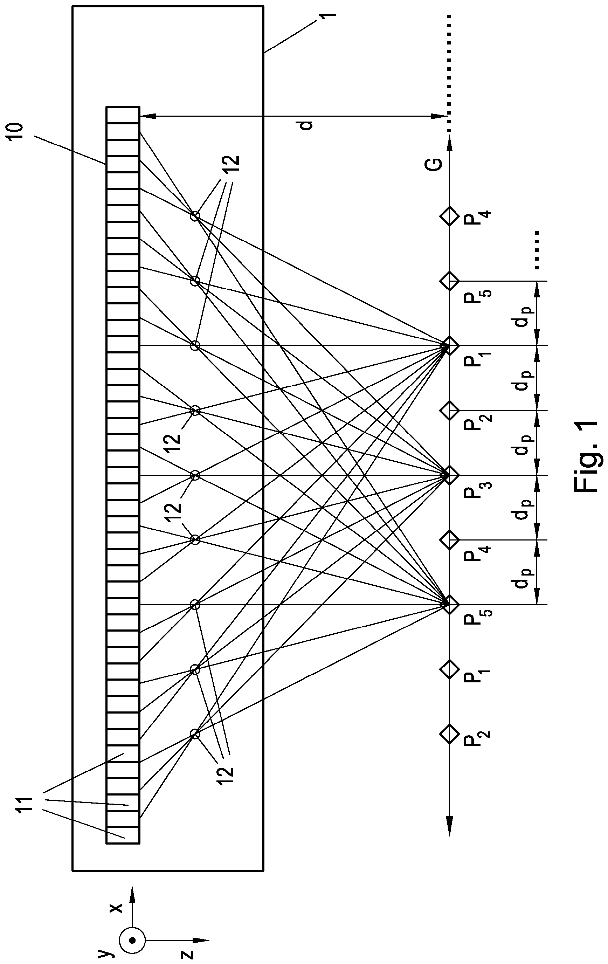

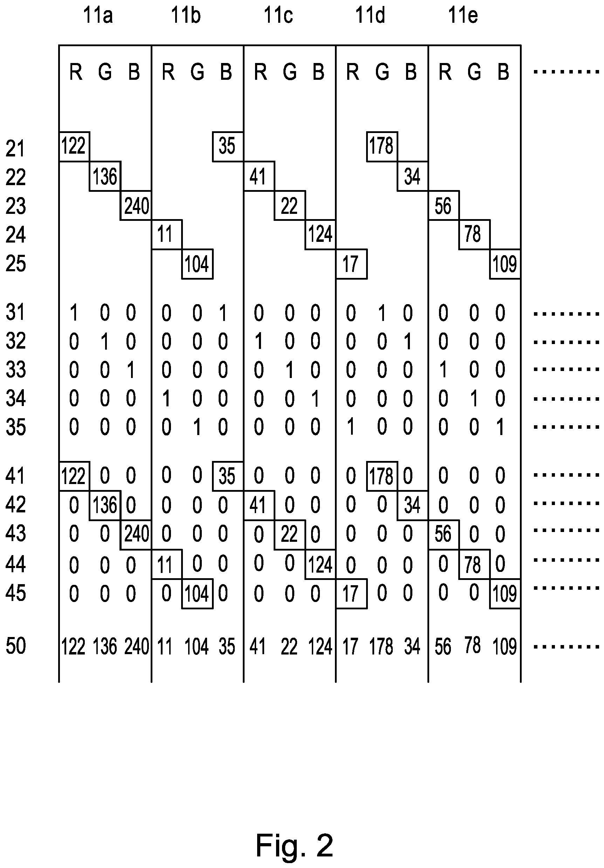

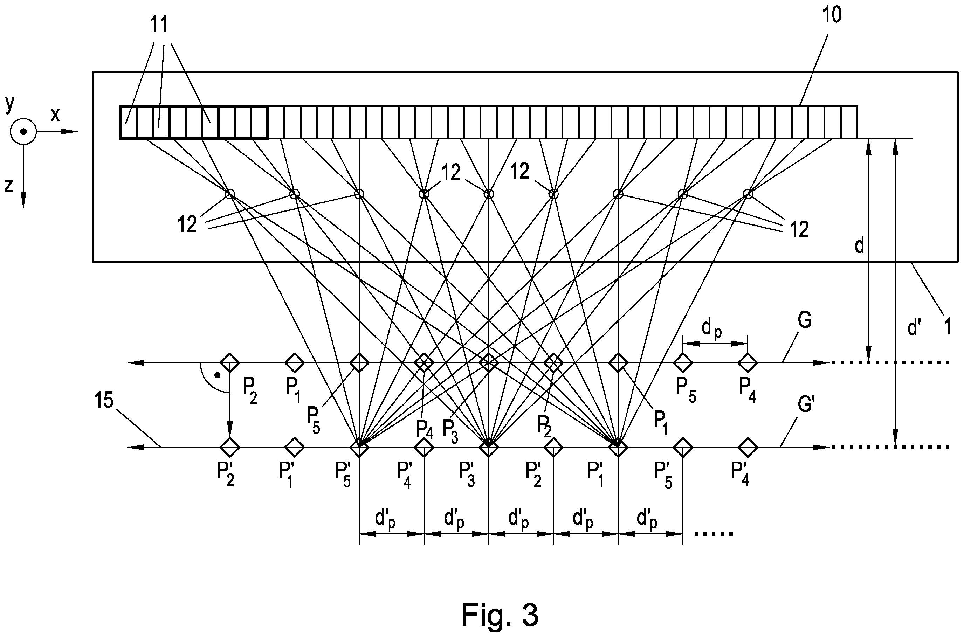

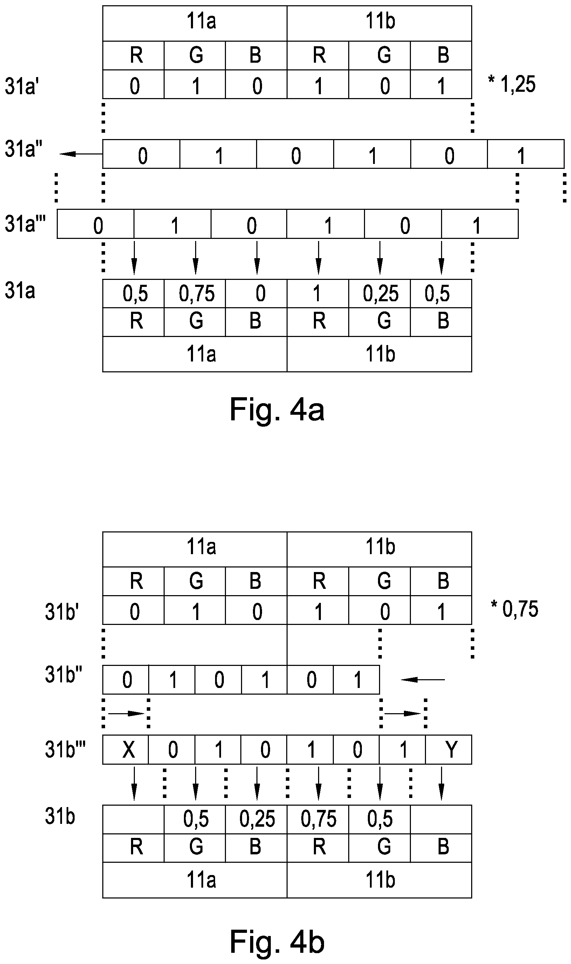

Eine bevorzugte Ausführungsform der Erfindung ist in den Zeichnungsfiguren näher dargestellt. **Fig. 1** zeigt das aus dem Stand der Technik vorbekannte Vorgehen. **Fig. 2** zeigt schematisch die Bestimmung von Zwischenergebnissen und Faktoren. **Fig. 3** zeigt ein gegenüber dem Stand der Technik (**Fig. 1**) modifiziertes Vorgehen, bei dem der jeweilige Abstand des Benutzers vom Monitor berücksichtigt wird. **Fig. 4a** zeigt die Berechnung des darzustellenden Bilds durch Streckung der Bildmaske. **Fig. 4b** zeigt die Berechnung des darzustellenden Bilds durch Stauchung der Bildmaske.

Um ein stereoskopisches Abbild einer Szene darzustellen, wird eine Anzahl von Grundbildern 21, 22, 23, 24, 25 vorgegeben, die die darzustellende dreidimensionale Szene jeweils aus unterschiedlichen Blickwinkeln zeigen (**Fig. 2**). Im vorliegenden Ausführungsbeispiel wurde bei der Erstellung der Grundbilder 21, 22, 23, 24, 25 dieselbe Szene aus fünf Aufnahmepositionen jeweils mit derselben Ausrichtung heraus aufgenommen, wobei die fünf Aufnahmepositionen auf einer Geraden normal zur Bildachse der Kamera gleichmäßig versetzt zueinander angeordnet sind. Die Größe der Grundbilder entspricht der nativen Auflösung des Bildschirms, allenfalls können die Grundbilder vorab auf die native Auflösung umgerechnet, insbesondere interpoliert, werden. Unter der nativen Auflösung wird die Auflösung der tatsächlich auf dem Monitor vorhandenen Pixel verstanden. Alternativ besteht auch die Möglichkeit, dass nur ein Teilbereich des Bildschirms für die Erstellung eines Lichtfelds genutzt wird. In diesem Fall kann die Erfindung auch auf einem Teilbereich der Anzeige des Monitors ausgeführt werden.

Die einzelnen Kameras haben zwar grundsätzlich dieselbe Ausrichtung, zeigen jedoch unterschiedliche Ausschnitte ihres Sichtbereichs. Sie haben unterschiedliche Projektionsmatrizen, die Kameraeinstellungen sind daher im Allgemeinen nicht ident. Grundbilder können daher perspektivisch leicht unterschiedliche Bilder sein, die üblicherweise horizontal versetzt aufgenommen wurden, wobei jeweils zwei benachbarte Bilder ein optimales stereoskopisches Bild ergeben. Beispielsweise 5 (Eingangs- bzw.) Grundbilder ergeben 4 stereoskopische Bilder; 8 (Eingangs- bzw.) Grundbilder ergeben 7 stereoskopische Bilder.

Ein bevorzugtes Ausführungsbeispiel der Erfindung wird anhand der beiliegenden Zeichnungsfiguren näher erörtert. **Fig. 1** zeigt das aus dem Stand der Technik vorbekannte Vorgehen. Hierbei ist ein autostereoskopischer Monitor 1 dargestellt, der eine Anzeigeeinheit 10 aufweist, wobei die Anzeigeeinheit 10 eine Anzahl von rasterförmig angeordneten Anzeigepixeln 11 umfasst. Im vorliegenden Fall ist ein Farbmonitor dargestellt. Bei diesem umfasst jedes der Anzeigepixel 11 eine Anzahl von Subpixeln.

In **Fig. 1** ist lediglich eine einzelne Bildzeile mit solchen Anzeigepixeln 11 dargestellt. Der autostereoskopische Monitor 1 verfügt über eine Vielzahl von in der Anzeigeebene der Anzeigeeinheit 10 übereinander angeordneten Bildzeilen mit im Wesentlichen demselben Aufbau. Der jeweiligen Bildzeile des autostereoskopischen Monitors 1 sind eine Anzahl von optischen Elementen 12 zugeordnet, die in **Fig. 1** durch Kreise dargestellt sind.

Die einzelnen Bildpunkte der Grundbilder 21, 22, 23, 24, 25 werden an unterschiedlichen Punkten des Bildschirms 10 des autostereoskopischen Monitors 1 zur Anzeige gebracht. Wie aus **Fig. 1** ersichtlich ist, wird im ganz links dargestellten Subpixel ein Bild, Farbwert oder Helligkeitswert angezeigt, der vom ersten Grundbild 21 herrührt und aus der jeweils abgebildeten Zeile und der ganz linken Spalte des ersten Grundbildes 21 stammt. Im nachfolgenden zweiten Subpixel der dargestellten Zeile des Bildschirms 1 wird der Farb- oder Helligkeitswert der jeweiligen Pixelposition aus dem zweiten Grundbild 22 dargestellt. Im nachfolgenden dritten Subpixel der dargestellten Zeile des Bildschirms wird der Farb- oder Helligkeitswert der jeweiligen Pixelposition aus dem dritten Grundbild 23 dargestellt usw. Im sechsten Subpixel der dargestellten Zeile des Bildschirms wird wieder der Farb- oder Helligkeitswert der jeweiligen Pixelposition aus dem ersten Grundbild 21 dargestellt. Diese konkrete Sub-Pixelzuordnung wird auch bei den weiteren Bildpunkten vorgenommen, wobei sich die Zuordnung auf der horizontalen Bildachse x wiederholt und jeweils die Farb- oder Helligkeitswerte der einzelnen Grundbilder dargestellt werden.

Aufgrund der Bündelung des Lichts der Sub-Pixel in den optischen Elementen 12 und der konkreten Anordnung der einzelnen optischen Elemente 12 werden sämtliche vom ersten Grundbild 21 herrührenden Farb- oder Helligkeitswerte auf einen Punkt P1 projiziert, der einen vorgegebenen Abstand d (in z-Achse) zum autostereoskopischen Monitor 1 (in x-y Ebene) aufweist.

Ebenso werden sämtliche vom zweiten Grundbild 22 herrührenden und auf dem Bildschirm des autostereoskopischen Monitors dargestellten Farb- und Helligkeitswerte in einem zweiten Punkt P2 gebündelt, der ebenfalls den Abstand d vom autostereoskopischen Monitor aufweist. Ebenso werden die Farb- und Helligkeitswerte der übrigen Grundbilder 23, 24, 25 jeweils in Punkten P3, P4, P5 gebündelt, die einen Abstand d zum autostereoskopischen Monitor aufweisen.

Sämtliche dieser Punkte P1, P2, P3, P4, P5 befinden sich auf derselben Gerade G, die im Wesentlichen parallel zu und in einem Abstand d, dem Nominalabstand bzw. Nennabstand, vom autostereoskopischen Monitor verläuft. Ein solches Vorgehen führt dazu, dass die Augen eines Betrachters, der sich im Abstand d vom autostereoskopischen Monitor 1 auf der Geraden G befindet, ein stereoskopisches Abbild der aufgenommen Szene wahrnehmen können. Der Nominalabstand bzw. Nennabstand kann als jener Abstand vom Monitor angesehen werden, an dem ein Betrachter das beste stereoskopische Bild wahrnehmen kann. Um eine besonders vorteilhafte Anpassung an die Augen zu erreichen, sind der Abstand und die Ausprägung der optischen Elemente 12 sowie der Abstand der optischen Elemente 12 vom Bildschirm 10 zu den einzelnen Bildpunkte 11 auf dem Bildschirm 10 so angeordnet, dass zwischen benachbarten Punkten P1, P2, P3, P4, P5, auf die jeweils benachbarte Grundbilder 21, 22, 23, 24, 25 abgebildet werden, jeweils der mittlere Augenabstand, von etwa 6,5 cm, oder ein geringerer Abstand d_{P} liegt, sodass auf die Augen des Betrachters jeweils zwei unterschiedliche, insbesondere benachbarte, Grundbilder 21, 22, 23, 24, 25 projiziert werden und damit ein stereoskopischer Eindruck der Szene entsteht. Der Abstand d_{P} kann auch wesentlich kleiner sein, um den Abstand der Aufnahmepositionen der Grundbilder zueinander zu verkleinern und damit einen weicheren Verlauf beim "lookaround" Effekt zu erzielen.

Wie aus dem vorliegenden Ausführungsbeispiel der Erfindung (**Fig. 2**) ersichtlich, wird jedes der Grundbilder 21, 22, 23, 24, 25 einer separaten Filterung unterzogen, die in periodischen Abständen durchlässig ist und im übrigen die Farb- und Helligkeitswerte der jeweils anderen Grundbilder 21, 22, 23, 24, 25 unterdrückt. Für jedes Grundbild 21, 22, 23, 24, 25 wird dabei jeweils eine separate Bildmaske 31, 32, 33, 34, 35 verwendet, wobei in jedem Subpixel 11 jeweils die Farb- und Intensitätswerte eines anderen Grundbildes 21, 22, 23, 24, 25 dargestellt werden. Die Summe aus allen Bildmasken ergibt eine Einsmatrix. In **Fig. 2** sind die zur Bestimmung einer Bildzeile erforderlichen Rechenschritte und Zwischenergebnisse näher dargestellt, wobei jeweils eine Zeile der Grundbilder 21, 22, 23, 24, 25 die jeweiligen Bildmasken 31, 32, 33, 34, 35 sowie die Resultate der Bildmasken 41, 42, 43, 44, 45 bei der Anwendung auf die jeweiligen Grundbilder 21, 22, 23, 24, 25 gezeigt sind. In anderen Worten, dem Grundbild 21 ist die Bildmaske 31 zugeordnet und wird das Resultat 41 erhalten usw. Die Zeile 50 stellt das resultierende Rasterbild aus allen Resultaten 41 bis 45 dar.

Die Farb- und Helligkeitswerte des ersten Grundbildes 21 werden jeweils subpixelweise mit den Maskenwerten der ersten Bildmaske 31 multipliziert analog einer Matrixmultiplikation, wodurch ein Zwischenergebnis 41 erhalten wird. Ebenso werden die Farb- und Helligkeitswerte der übrigen Grundbilder 22, 23, 24, 25 jeweils pixelweise mit den Maskenwerten der ihnen jeweils zugeordneten Bildmaske 32, 33, 34, 35 multipliziert, wodurch jeweils ein Zwischenergebnis 42, 43, 44, 45 erhalten wird. Die einzelnen Zwischenergebnisse 41, 42, 43, 44, 45 werden anschließend zu einem endgültigen auf dem Bildschirm 11 darzustellenden Rasterbild 50 addiert. Für die Ermittlung des Rasterbilds wird eine Gewichtungseinheit verwendet, die jeweils Speicher für die Bildmasken 31, 32, 33, 34, 35 sowie für die Grundbilder 21, 22, 23, 24, 25 aufweist und aufgrund der vorgenommenen Gewichtung ein Rasterbild 50 an ihrem Ausgang zur Verfügung hält und an den Bildschirm 10 des autostereoskopischen Monitors 1 abgibt.

In **Fig. 2** ist lediglich das Vorgehen für eine einzige Bildzeile dargestellt, wobei das Vorgehen für die weiteren einzelnen Bildzeilen eines Monitors im Prinzip jeweils gleich erfolgt, jedoch die periodische Subpixelzuordnung für jede Bildzeile horizontal um ein bestimmtes Offset, bezogen auf die jeweils vorhergehende Bildzeile, verschoben sein kann.

Häufig werden die Linsen oder Parallax Barrieren in 3D Monitoren in einem bestimmten Winkel schräg gestellt, z.B. bei Slanted Lenticular Lens, um die resultierende Auflösungsreduktion im 3D Betrieb gleichmäßig auf die x- und y-Achse (der Monitorebene bzw. Betrachtungsebene) aufzuteilen, weshalb in solchen Fällen die Subpixelzuordnung in jeder Zeile um ein bestimmtes horizontales Offset, bezogen auf die jeweils vorhergehende Pixelzeile, nach rechts oder links verschoben ist.

Es ist grundsätzlich nicht erforderlich, dass alle einzelnen Farb- und Helligkeitswerte der Bildpunkte, d.h. bei dreifarbigen Bildpunkten der Rot-, Grün- und Blauanteil, der Grundbilder 21, 22, 23, 24 25 zur Gänze einer Filterung unterzogen werden. Es ist vielmehr auch möglich, dass lediglich einzelne Farbanteile von Bildpunkten 11 subpixelweise, d.h. jeweils separat und entsprechend der Anordnung auf dem Bildschirm 10, gewichtet werden, wobei jeweils entsprechend auf die Anordnung der für die jeweilige Farbe verwendeten Subpixel in der Bildzeile des Bildschirms 10 des autostereoskopischen Monitors 1 Rücksicht genommen wird. Im vorliegenden Fall sind die einzelnen Subpixel auf dem Bildschirm des autostereoskopischen Monitors 1 jeweils in der Reihenfolge ...RGBRGBRGB... angeordnet, sodass vom ersten Grundbild 21 der rote Kanal des ganz linken Bildpunktes 11a, vom zweiten Grundbild 22 der grüne Kanal des ganz linken Bildpunktes 11a und vom dritten Grundbild 23 der blaue Kanal des ganz linken Bildpunktes 11a bei der Bildung der Farb- und Intensitätswerte des ganz linken Bildpunktes 11a herangezogen werden. Für das neben dem ganz linken Bildpunkt 11a liegende zweite Bildpunkt 11b der jeweiligen Bildzeile werden dementsprechend der Rotwert des vierten Grundbildes 24, der Grünwert des fünften Grundbildes 25 und der Blauwert des ersten Grundbildes 21 herangezogen. Dieses Vorgehen wird für die gesamte Bildzeile entsprechend der vorgegebenen Bildmaske fortgesetzt.

Ein optimales Vorgehen zur Erstellung eines stereoskopischen Bildes für den Fall, dass sich der Betrachter nicht in einem Abstand der nominalen Distanz d vom Bildschirm 1 befindet, wird in **Fig. 3** näher beschrieben. Wesentlicher Vorteil gegenüber der aus dem Stand der Technik bekannten Vorgehensweisen ist, dass die optischen Elemente 12 oder die Bildpunkt 11 gegenüber ihren vorgegebenen Positionen nicht verändert werden brauchen und lediglich die Bildmasken 31, 32, 33, 34, 35 neu ermittelt werden. **Fig. 3** zeigt eine Gerade G', die sich in einem Abstand d' zum Bildschirm 1 befindet, wobei dieser Abstand d' des Betrachters vom autostereoskopischen Monitor 1 gerade nicht der nominalen Distanz d des autostereoskopischen Monitors 1 entspricht. Um bei Kenntnis des Abstandes d' des Betrachters vom autostereoskopischen Monitor 1 ein optimales Lichtfeld für diesen auf der Geraden G' befindlichen Betrachter erzeugen zu können, wird im Folgenden eine Änderung des eingangs beschriebenen Verfahrens vorgegeben, wobei lediglich die Bildmasken 31, 32, 33, 34, 35 an die unterschiedliche Distanz d' angepasst werden.

In einem ersten Schritt wird hierbei der Abstand d' des jeweiligen Betrachters zum autostereoskopischen Bildschirm 1 mittels einer Detektionseinheit ermittelt, z.B. mittels einer auf den Benutzer gerichteten Kamera, oder auf eine beliebige Entfernung festgelegt. Als Entfernung wird dabei der Normalabstand des Betrachters bestimmt, also die Distanz bzw. Entfernung zwischen dem Betrachter und dem Monitor normal zur Bildebene des Monitors. Um den Bildschirm 10 derart anzusteuern, dass für einen Betrachter mit einem beliebigen Abstand d' vom Monitor ein der Szene entsprechendes Lichtfeld ausgesendet wird, werden die einzelnen Bildmasken 31, 32, 33, 34, 35 um einen vom Abstand d' des Betrachters abhängigen Wert gestreckt oder gestaucht. Eine Möglichkeit, den Streckungsfaktor s abhängig vom nominalen Abstand d und vom tatsächlichen Abstand d' zu ermitteln sieht vor, dass der Streckfaktor s aus einem Quotienten bzw. Verhältnis des nominalen Abstand d zum tatsächlichen Abstand d' gebildet ist.

Die Stauchung (**Fig. 4b**) bzw. Streckung (**Fig. 4a**) der Bildmasken 31, 32, 33, 34, 35 kann grundsätzlich mit sämtlichen aus dem Stand der Technik vorgegebenen bzw. bekannten Interpolationsverfahren durchgeführt werden, wobei grundsätzlich von den in **Fig. 2** dargestellten Bildmasken 31, 32, 33, 34, 35 als Grundbildmasken 31', 32', 33', 34', 35' ausgegangen wird. Sofern eine Stauchung vorgenommen wird, wird zunächst eine gestauchte Grundbildmaske 31", 32", 33", 34", 35" erstellt. Durch die Stauchung (**Fig. 4b**) bleiben einzelne Bereiche der Grundbildmaske 31", 32", 33", 34", 35", die für die spätere Gewichtung der Grundbilder verwendet werden, undefiniert. Aus diesem Grund wird eine ergänzte Grundbildmaske 31''', 32"', 33''', 34"', 35'" erstellt, bei der die in der gestauchten Grundbildmaske 31", 32", 33", 34", 35" undefiniert gebliebenen Bereiche X, Y wertmäßig festgelegt werden. Dies kann entweder durch Nullsetzen der Bereiche X, Y erfolgen. Es ist allerdings auch möglich, außen fehlende Sub-Pixel in den Bereichen X, Y an die durch periodische Fortsetzung der Grundbildmasken 31', 32', 33', 34', 35' zu ergänzen.

In **Fig. 4a und 4b** wird die Erstellung einer Bildmaske 31 näher dargestellt, wobei **Fig. 4a** eine Streckung mit einem Streckfaktor 1.25 und **Fig. 4b** eine Stauchung mit einem Streckfaktor 0.75 zeigt.

Zur Veranschaulichung des rechnerischen Vorgehens ist eine Matrix mit der 3-fachen Breite und 1-fachen Höhe der nativen Pixel-Auflösung eines Teils des Bildschirms gezeigt, sodass die Anzahl der Elemente der Matrix der Anzahl der Subpixel des Teils des Bildschirms entspricht. Die Matrix-Elemente der Grundbildmaske 31' tragen jeweils abwechselnd die Werte 1 und 0 bzw. sind den Matrix-Elementen alternierend die Werte 0 und 1 zugewiesen. Bei dem endgültigen Vorgehen können die Matrix-Elemente der Grundbildmasken jedoch Werte im Wertebereich zwischen 0 und 1 aufweisen, d.h. den Wert 0, den Wert 1 oder alle möglichen Werte dazwischen. Dabei ist es zwar möglich aber nicht zwingend erforderlich, dass die Werte ein periodisches Muster bilden. Die Grundbildmaske 31' erstreckt sich im Wesentlichen über das gesamte Grundbild bzw. über den gesamten Bildschirm 10. In einem ersten Schritt wird die Grundbildmaske 31a', 31b' um den Streckfaktor s gestreckt (**Fig. 4a**) bzw. gestaucht (**Fig. 4b**), man erhält eine gestreckte bzw. gestauchte Grundbildmaske 31a" bzw. 31b". Anschließend wird die gestreckte bzw. gestauchte Grundbildmaske 31a", 31b" horizontal zentriert, sodass der horizontale Mittelpunkt der Grundbildmaske 31a'", 31 b'" mit dem horizontalen Mittelpunkt der Grundbildmaske 31a', 31b' übereinstimmt. In einem letzten Schritt werden die ausgerichteten Grundbildmasken 31a'", 31b'" auf eine Bildmaske 31a, 31b mittels Interpolation übertragen, wobei die Bildmaske 31a, 31b dieselbe Auflösung und Breite aufweist wie die ursprüngliche Grundbildmaske 31a', 31b' und somit am Bildschirm 10 darstellbar ist.

Bei der in **Fig. 4b** dargestellten gestauchten Grundbildmaske 31b" besteht das Problem, dass für die dargestellten Bereiche X, Y an sich keine Werte vorgegeben sind. Es ist einerseits möglich, diese Bereiche mit Nullen aufzufüllen, um für die vorzunehmende Interpolation die ausreichenden Werte zur Verfügung zu haben. In diesem Fall erhält der Rotwert r des ersten Bildpunktes 11a den Wert 0, der Blauwert b des zweiten Bildpunktes 11b den Wert 0.25.

Alternativ besteht auch die Möglichkeit, die Bereiche der Grundbildmaske 31b'" periodisch fortzusetzen und auf diese Weise die Interpolation vorzunehmen. Durch eine periodische Fortsetzung würde der Bereich X den Wert 1, der Bereich Y den Wert 0 erhalten. In diesem Fall erhält der Rotwert r des ersten Bildpunktes 11a den Wert 0.75, der Blauwert b des zweiten Bildpunktes 11b den Wert 0.25.

Durch die Änderung der Bildmasken 31, 32, 33, 34, 35 wird erreicht, dass das Licht von Sub-Pixeln, die von demselben Grundbild 21, 22, 23, 24, 25 herrühren, auf denselben Punkt P1', P2', P3', P4', P5' auf der Geraden G' abgebildet werden (**Fig. 3**). Der Abstand d_{P}' zwischen je zwei benachbarten Punkten P1', P2', P3', P4', P5' auf der Geraden G', auf der sich der Betrachter befindet, entspricht dem Abstand d_{P} zwischen je zwei benachbarten Punkten P1, P2, P3, P4, P5 auf der Geraden G mit nominalem Abstand d zum autostereoskopischen Monitor 1. Die Änderung der Bildmasken 31, 32, 33, 34, 35 wird nach Vorgabe des Abstands d' des Betrachters vom Monitor 1 von einer Aktualisierungseinheit vorgenommen.

Durch das vorstehende Vorgehen weisen die Bildmasken 31, 32, 33, 34, 35 einen gegenüber der Grundbildmaske gestreckten oder gestauchten Verlauf auf. Die Bildmasken 31, 32, 33, 34, 35 werden in Richtung der horizontalen Bildachse derart gestreckt oder gestaucht, dass die Streckung der einzelnen Bildmasken 31, 32, 33, 34, 35 indirekt proportional zum ermittelten Normalabstand d' ist. Das Rasterbild 50 wird auf dem Bildschirm 10 des autostereoskopischen Monitors 1 dargestellt. Beim laufenden Betrieb des autostereoskopischen Monitors 1 steht für jeden Anzeigezeitpunkt jeweils eine Anzahl von Grundbildern 21, 22, 23, 24, 25 zur Verfügung. Der Normalabstand d' des Betrachters vom Monitor 1 normal zur Bildschirmebene des Monitors 1 wird laufend ermittelt oder sonst festgelegt. Ändert sich der Normalabstand d' des Benutzers vom autostereoskopischen Monitor 1 werden die Bildmasken 31, 32, 33, 34, 35 entsprechend neu berechnet und die Darstellung der Grundbilder 21, 22, 23, 24, 25 erfolgt als Resultat anhand der neu erstellten Bildmasken 31, 32, 33, 34, 35.

## Patentansprüche

1. Verfahren zur Darstellung einer dreidimensionalen Szene auf einem autostereoskopischen Monitor (1), wobei
a) eine Anzahl N von Grundbildern (21, 22, 23, 24, 25) einer dreidimensionalen Szene vorgegeben wird, die die dreidimensionale Szene jeweils aus unterschiedlichen Blickwinkeln zeigen,
b) für jedes der Grundbilder (21, 22, 23, 24, 25) jeweils eine Grundbildmaske (31, 32, 33, 34, 35) mit jeweils der Größe einer nativen Bildschirmauflösung des autostereoskopischen Monitors (1) oder eines Teilbereichs des autostereoskopischen Monitors vorgegeben wird,
c) der Normalabstand (d') des Betrachters vom autostereoskopischen Monitor (1) normal zur Bildschirmebene des autostereoskopischen Monitors (1) ermittelt wird, und
**dadurch gekennzeichnet, dass**
d) ein Streckfaktor in Abhängigkeit des Normalabstands (d') ermittelt wird, und
e) die einzelnen Grundbilder (21, 22, 23, 24, 25) pixelweise oder subpixelweise mit den Werten der ihnen jeweils zugeordneten Bildmaske (31, 32, 33, 34, 35) gewichtet und anschließend zu einem Rasterbild (50) addiert werden,
f) das derart ermittelte Rasterbild (50) auf dem Bildschirm (10) des autostereoskopischen Monitors (1) dargestellt wird,
g) die Grundbildmasken entsprechend dem Streckfaktor in Richtung der horizontalen Bildachse gestreckt oder gestaucht und mittels Interpolation auf jeweilige Bildmasken (31, 32, 33, 34, 35) übertragen werden, wobei die jeweiligen Bildmasken (31, 32, 33, 34, 35) dieselbe Auflösung und Breite aufweisen wie die Grundbildmasken, und
h) die durch Stauchung und/oder Streckung aus den Grundbildmasken erstellten Bildmasken horizontal zentriert werden, sodass der horizontale Mittelpunkt der zentrierten Bildmasken mit dem horizontalen Mittelpunkt der Grundbildmasken übereinstimmt.

2. Verfahren nach Anspruch 1, **dadurch gekennzeichnet, dass** einer Bildzeile des Bildschirms (10) eine Anzahl von optischen Elementen (12) zugeordnet wird, wobei vom jedem Grundbild herrührenden Farb- und/oder Helligkeitswerte über die jeweiligen optischen Elemente (12) auf einen jeweiligen Projektions-Punkt (P1, P2, P3, P4, P5) projiziert werden, der einen vorgegebenen Abstand (d, d') zum autostereoskopischen Monitor (1) aufweist, wobei der Abstand (d'ₚ) zwischen je zwei benachbarten Projektions-Punkten (P1', P2', P3', P4', P5') auf der Geraden (G'), auf der sich der Betrachter aktuell befindet, im Wesentlichen dem jeweiligen Abstand (dₚ) zwischen je zwei benachbarten Projektions-Punkten (P1, P2, P3, P4, P5) auf der Geraden (G) mit nominalem Abstand (d) zum autostereoskopischen Monitor (1) entspricht.

3. Verfahren nach Anspruch 1, **dadurch gekennzeichnet, dass** Schritt c) einmalig oder zu vorgegebenen Aktualisierungszeitpunkten, insbesondere laufend, durchgeführt und der Normalabstand (d') neu gemessen und aktualisiert wird, und dass bei Änderung des ermittelten Normalabstands (d') oder nach jeder Bestimmung des Normalabstands (d') die Schritte d), g) und h) erneut durchgeführt werden.

4. Verfahren nach einem der Ansprüche 1 bis 3, **dadurch gekennzeichnet, dass** zur Darstellung bewegter dreidimensionaler Szenen eine Videodatenstruktur zur Verfügung gestellt wird, wobei für jeden Zeitpunkt jeweils N Grundbilder (21, 22, 23, 24, 25) der dreidimensionalen Szene zur Verfügung stehen, und für jeden Zeitpunkt jeweils die Schritte b), c), e), f) ausgeführt werden.

5. Autostereoskopischer Monitor zur Darstellung einer dreidimensionalen Szene, die als eine Anzahl von Grundbildern (21, 22, 23, 24, 25) vorliegt, die die darzustellende dreidimensionale Szene jeweils aus unterschiedlichen Blickwinkeln zeigen, umfassend
- für jedes der Grundbilder (21, 22, 23, 24, 25) jeweils einen Speicher für eine Grundbildmaske (31, 32, 33, 34, 35) mit der Größe einer nativen Bildschirmauflösung des autostereoskopischen Monitors, oder eines dem stereoskopischen Anzeigefenster angepassten Teilbereichs davon,
- eine Gewichtungseinheit, die dazu ausgebildet ist, eine Anzahl von Grundbildmasken vorzugeben,
- einen Bildschirm (1) zur Darstellung eines Rasterbilds, und
- optische Elemente (12), die bei Verwendung einer Grundbildmaske (31', 32', 33', 34', 35') das von den Grundbildern (21, 22, 23, 24, 25) herrührende Licht jeweils auf Punkte (P1, P2, P3, P4, P5) auf einer Geraden (G) abbilden,
- eine Detektionseinheit zur Bestimmung des Normalabstands (d') des Betrachters vom autostereoskopischen Monitor (1) normal zur Bildebene des autostereoskopischen Monitors (1), und
**dadurch gekennzeichnet, dass**
- eine Aktualisierungseinheit vorgesehen ist, die bei Änderung des Normalabstands (d') des Betrachters einen Streckfaktor in Abhängigkeit des Normalabstands (d') ermittelt, wobei die Bildmasken (31, 32, 33, 34, 35) nach der horizontalen Bildachse (x) in Abhängigkeit des Streckfaktors gestreckt oder gestaucht werden,
- die Gewichtungseinheit, dazu ausgebildet ist, die einzelnen Grundbilder (21, 22, 23, 24, 25) subpixelweise mit den Werten der ihnen jeweils zugeordneten Bildmaske (31, 32, 33, 34, 35) zu gewichten und anschließend zu addieren, und, die Grundbildmasken entsprechend dem Streckfaktor in Richtung der horizontalen Bildachse zu strecken oder zu stauchen und mittels Interpolation auf die Bildmasken (31, 32, 33, 34, 35) zu übertragen, wobei die Bildmasken (31, 32, 33, 34, 35) dieselbe Auflösung und Breite aufweisen wie die Grundbildmasken und
- die durch Stauchung und/oder Streckung aus den Grundbildmasken erstellten Bildmasken horizontal zu zentrieren, sodass der horizontale Mittelpunkt der zentrierten Bildmasken mit dem horizontalen Mittelpunkt der Grundbildmasken übereinstimmt.

6. Monitor nach Anspruch 5, **dadurch gekennzeichnet, dass** der Abstand (d'ₚ) zwischen je zwei benachbarten Punkten (P1', P2', P3', P4', P5') auf der Geraden (G'), auf der sich der Betrachter befindet, dem Abstand (dₚ) zwischen je zwei benachbarten Punkten (P1, P2, P3, P4, P5) auf der Geraden (G) mit nominalem Abstand (d) zum autostereoskopischen Monitor (1) entspricht.

## Claims

1. Method for displaying a three-dimensional scene on an auto stereoscopic monitor (1), wherein
a) a number N of basic images (21, 22, 23, 24, 25) of a three-dimensional scene are pre-determined, which each show the three-dimensional scene from different viewing angles,
b) a basic image mask each (31, 32, 33, 34, 35), respectively with the size of a native monitor resolution of the auto stereoscopic monitor (1) or a part area of the auto stereoscopic monitor is pre-determined for each of the basic images (21, 22, 23, 24, 25),
c) the normal distance (d') of the viewer of the auto stereoscopic monitor (1) is calculated as normal to the monitor level of the auto stereoscopic monitor (1) and **characterised in that**
d) a stretching factor is calculated depending on the normal distance (d'), and
e) the individual basic images (21, 22, 23, 24, 25) are weighted pixel by pixel or subpixel by subpixel with the respective image mask (31, 32, 33, 34, 35) allocated to them, and are subsequently added up to a grid image (50),
f) the grid image (50) calculated in this way is displayed on the monitor (10) of the auto stereoscopic monitor (1),
g) the basic image masks are stretched or compressed according to the stretching factor in the direction of the horizontal image axis and are transmitted to respective image masks (31, 32, 33, 34, 35) by means of interpolation, wherein the respective image masks (31, 32, 33, 34, 35) have the same resolution and width as the basic image masks, and
h) the image masks produced from the basic image masks through compression and/or stretching are centred horizontally, so that the horizontal centre point of the centred image masks matches the horizontal centre point of the basic image masks.

2. Method according to claim 1, **characterised in that** an image line of the monitor (10) is allocated a number of optical elements (12), wherein colour and/or brightness values originating from each basic image are projected above the respective optical elements (12) onto a respective projection point (P1, P2, P3, P4, P5) that has a pre-determined distance (d, d') from the auto stereoscopic monitor (1), wherein the distance (d'ₚ) between two neighbouring projection points (P1', P2', P3', P4', P5') each on the straight line (G'), on which the viewer is currently located, substantially equals the respective distance (dₚ) between two neighbouring projection points (P1, P2, P3, P4, P5) each on the straight line (G) with a nominal distance (d) from the auto stereoscopic monitor (1).

3. Method according to claim 1, **characterised in that** step c) is carried out once or at pre-determined actualisation times, in particular continuously, and the normal distance (d') is newly measured and updated, and that steps d), g) and h) are carried out again if the calculated normal distance (d') changes or after each determination of the normal distance (d').

4. Method according to one of the claims 1 to 3, **characterised in that** a video data structure is made available for displaying moving three-dimensional scenes, wherein N basic images (21, 22, 23, 24, 25) of the three-dimensional scene are available for each point in time, and respective steps b), c), e), f) are carried out for each point in time.

5. Auto stereoscopic monitor for displaying a three-dimensional scene, which is available as a number of basic images (21, 22, 23, 24, 25) which each show the three-dimensional scene to be displaying from different viewing angles, comprising
- a memory each for a basic image mask (31, 32, 33, 34, 35) for each of the basic images (21, 22, 23, 24, 25), with the size of a native image resolution of the auto stereoscopic monitor, or a part area of the same adapted to the stereoscopic display window,
- a weighting unit, designed for pre-determining a number of basic image masks,
- a monitor (1) for displaying a grid image, and
- optical elements (12), which each displays the light originating from the basic images (21, 22, 23, 24, 25) when using a basic image mask (31', 32', 33', 34', 35') at points (P1, P2, P3, P4, P5) on a straight line (G),
- a detection unit for determining a normal distance (d') of the viewer from the auto stereoscopic monitor (1) that is normal to the image level of the auto stereoscopic monitor (1), and
**characterised in that**
- an actualisation unit is provided, which calculates a stretching factor depending on the normal distance (d') when the normal distance (d') of the viewer changes, wherein the image masks (31, 32, 33, 34, 35) are stretched of compressed along the horizontal image axis (x) depending on the stretching factor,
- the weighting unit is designed for weighting individual basic images (21, 22, 23, 24, 25) subpixel by subpixel with the values of the respective image mask (31, 32, 33, 34, 35) allocated to them and to subsequently add them up, and to stretch or compress the basic image masks according to the stretching factor in the direction of the horizontal image axis and to transmit the same to the image masks (31, 32, 33, 34, 35) by means of interpolation, wherein the image masks (31, 32, 33, 34, 35) have the same resolution and width as the basic image masks, and
- the image masks created from the basic image masks through compression and/or stretching are centred horizontally, so that the horizontal centre point of the centred image masks match the horizontal centre point of the basic image masks.

6. Monitor according to claim 5, **characterised in that** the distance (d'ₚ) between two neighbouring points (P1', P2', P3', P4', P5') each on the straight line (G'), on which the viewer is located equals the distance (dₚ) between two neighbouring points (P1, P2, P3, P4, P5) each on the straight line (G) with a nominal distance (d) from the auto stereoscopic monitor (1).

## Revendications

1. Procédé pour la représentation d'une scène tridimensionnelle sur un moniteur autostéréoscopique (1),
a) un nombre N d'images de base (21, 22, 23, 24, 25) d'une scène tridimensionnelle qui montrent la scène tridimensionnelle à chaque fois à partir d'angles de vue différents étant spécifié,
b) pour chacune des images de base (21, 22, 23, 24, 25), un masque d'image de base (31, 32, 33, 34, 35) présentant à chaque fois la dimension d'une résolution d'origine de l'écran du moniteur autostéréoscopique (1) ou d'une zone partielle du moniteur autostéréoscopique étant à chaque fois spécifié,
c) la distance normale (d') de l'observateur par rapport au moniteur autostéréoscopique (1) étant déterminée perpendiculaire au plan de l'écran du moniteur autostéréoscopique (1) et **caractérisé en ce que**
d) un facteur d'étirage est déterminé en fonction de la distance normale (d'), et
e) les différentes images de base (21, 22, 23, 24, 25) sont pondérées, par pixel ou de manière inférieure au pixel, par les valeurs du masque d'image (31, 32, 33, 34, 35) qui leur est à chaque fois attribué et ensuite additionnées en une trame (50),
f) la trame (50) ainsi déterminée est représentée sur l'écran (10) du moniteur autostéréoscopique (1),
g) les masques d'image de base sont étirés ou refoulés dans la direction de l'axe d'image horizontal en fonction du facteur d'étirage et transférés aux différents masques d'image (31, 32, 33, 34, 35) au moyen d'une interpolation, les différents masques d'image (31, 32, 33, 34, 35) présentant les mêmes résolution et largeur que celles des masques d'image de base, et
h) les masques d'image créés à partir de masques d'image de base sont centrés horizontalement par étirement et/ou refoulement de telle sorte que le point médian horizontal des masques d'image centrés correspond au point médian horizontal des masques d'image de base.

2. Procédé selon la revendication 1, **caractérisé en ce qu'**un nombre d'éléments optiques (12) est attribué à une ligne d'image de l'écran (10), des valeurs de luminosité et/ou de couleur provenant de chaque image de base étant projetées par les éléments optiques (12) respectifs sur un point de projection (P1, P2, P3, P4, P5) respectif qui présente une distance spécifiée (d, d') par rapport au moniteur autostéréoscopique (1), la distance (d'ₚ) entre à chaque fois deux points de projection adjacents (P1', P2', P3', P4', P5') sur la droite (G'), sur laquelle l'observateur se trouve actuellement, correspondant essentiellement à la distance (dₚ) respective entre à chaque fois deux points de projection adjacents (P1, P2, P3, P4, P5) sur la droite (G) avec une distance nominale (d) par rapport au moniteur autostéréoscopique (1).

3. Procédé selon la revendication 1, **caractérisé en ce que** l'étape c) est effectuée une fois ou aux moments de mises à jour spécifiés, notamment en permanence, et la distance normale (d') est remesurée et mise à jour, et **en ce que** les étapes d), g) et h) sont effectuées de nouveau lors d'une modification de la distance normale (d') déterminée ou après chaque détermination de la distance normale (d').

4. Procédé selon l'une quelconque des revendications 1 à 3, **caractérisé en ce qu'**une structure de données vidéo est mise à disposition pour représenter des scènes tridimensionnelles en mouvement, un nombre N d'images de base (21, 22, 23, 24, 25) de la scène tridimensionnelle étant mis à disposition à chaque moment, et les étapes b), c), e), f) étant effectuées respectivement à chaque moment.

5. Moniteur autostéréoscopique pour représenter une scène tridimensionnelle qui présente un nombre d'images de base (21, 22, 23, 24, 25) qui montrent la scène tridimensionnelle à représenter à chaque fois à partir d'angles de vue différents, comprenant
- pour chacune des images de base (21, 22, 23, 24, 25) respectivement une mémoire pour un masque d'image de base (31, 32, 33, 34, 35) avec la dimension d'une résolution d'origine de l'écran du moniteur autostéréoscopique ou d'une zone partielle adaptée à la fenêtre d'affichage stéréoscopique de celui-ci,
- une unité de pondération formée pour spécifier un nombre de masques d'image de base,
- un écran (1) pour représenter une trame, et
- des éléments optiques (12) qui représentent sur une droite (G) la lumière provenant des images de base (21, 22, 23, 24, 25) respectivement sur les points (P1, P2, P3, P4, P5) lorsqu'un masque d'image de base (31', 32', 33', 34', 35') est utilisé,
- une unité de détection pour déterminer la distance normale (d') de l'observateur du moniteur autostéréoscopique (1) perpendiculaire par rapport au plan image du moniteur autostéréoscopique (1) et **caractérisé en ce que**
- une unité de mise à jour est prévue, unité qui détermine un facteur d'étirage en fonction de la distance normale (d') en cas de modification de la distance normale (d') de l'observateur, les masques d'image (31, 32, 33, 34, 35) étant étirés ou refoulés selon l'axe d'image horizontal (x) en fonction du facteur d'étirage,
- l'unité de pondération est formée afin de pondérer de manière inférieure au pixel les différentes images de base (21, 22, 23, 24, 25) par les valeurs du masque d'image (31, 32, 33, 34, 35) qui leur est à chaque fois attribué et ensuite de les additionner, et d'étirer ou de refouler les masques d'image de base dans la direction de l'axe d'image horizontal en fonction du facteur d'étirage et de les transférer aux masques d'image (31, 32, 33, 34, 35) au moyen d'une interpolation, les masques d'image (31, 32, 33, 34, 35) présentant les mêmes résolution et largeur que celles des masques d'image de base, et
- les masques d'image créés à partir de masques d'image de base sont centrés horizontalement par étirement et/ou refoulement de telle sorte que le point médian horizontal des masques d'image centrés correspond au point médian horizontal des masques d'image de base.

6. Moniteur selon la revendication 5, **caractérisé en ce que** la distance (d'ₚ) entre à chaque fois deux points (P1', P2', P3', P4', P5') adjacents sur la droite (G'), sur laquelle l'observateur se trouve, correspondant à la distance (dₚ) entre à chaque fois deux points (P1, P2, P3, P4, P5) adjacents sur la droite (G) avec une distance nominale (d) par rapport au moniteur autostéréoscopique (1).
